# EUROPÄISCHE PATENTSCHRIFT

(11) **EP 4 015 158 B1**
(45) Veröffentlichungstag und Bekanntmachung des Hinweises auf die Patenterteilung: **25.10.2023**
(21) Anmeldenummer: 21193016.9
(22) Anmeldetag: 25.08.2021
(51) Int. Cl.: B25J 9/04, B25J 18/02

(54) **HANDHABUNGSVORRICHTUNG ZUM HANDHABEN VON GEGENSTÄNDEN**
HANDLING DEVICE FOR HANDLING OBJECTS
DISPOSITIF DE MANUTENTION PERMETTANT DE MANIPULER DES OBJETS

(30) Priorität: 15.12.2020 DE 102020133624
(43) Veröffentlichungstag der Anmeldung: 22.06.2022
(73) Patentinhaber: J. Schmalz GmbH, 72293 Glatten (DE)
(72) Erfinder: Frey, Matthias, 72172 Sulz (DE); Klein, Sebastian, 89150 Laichingen (DE)
(74) Vertreter: DREISS Patentanwälte PartG mbB

(56) Entgegenhaltungen:
- EP-A1- 1 986 165
- EP-B1- 0 891 292
- US-A1- 2020 338 758

## Beschreibung

Die Erfindung betrifft eine Handhabungsvorrichtung mit Hubschlauch zum Handhaben von Gegenständen.

Solche Handhabungsvorrichtungen dienen insbesondere zum Anheben, Verlagern, Absenken und Absetzen von Gegenständen. Sie umfassen typischerweise einen sich entlang einer vertikalen Z-Achse erstreckenden Hubschlauch und eine an diesem angeordnete Greifereinrichtung, mittels welcher ein zu handhabender Gegenstand aufnehmbar ist. Durch Beaufschlagen des Schlauchinnenraums mit Unterdruck stellt der Hubschlauch eine Hubwirkung bereit, sodass ein Anheben der Greifereinrichtung und somit ein Anheben eines an der Greifereinrichtung gehaltenen Gegenstands unterstützt ist. Durch Belüften des Schlauchinnenraums ist der Hubschlauch wieder verlängerbar, sodass der Gegenstand abgesetzt werden kann. Der Hubschlauch dient insofern als translatorischer Antrieb zur Unterstützung einer Heb- bzw. Senkbewegung entlang einer vertikalen Z-Achse.

Aus der sind aus der WO 97/36818 A1 ist eine Handhabungsvorrichtung mit Hubschlauch bekannt, bei welcher der Hubschlauch entlang einer Schiene verlagerbar ist, sodass ein Gegenstand angehoben, zu einer anderen Position verlagert und wieder abgesetzt werden kann.

Handhabungsvorrichtungen mit Hubschlauch werden üblicherweise manuell bedient, bspw. über einen an dem Hubschlauch angeordneten Bediengriff, mittels welchem der Hubschlauch verlagert werden kann und eine Unterdruckzufuhr zu dem Hubschlauch gesteuert werden kann.

Der vorliegenden Erfindung liegt die Aufgabe zugrunde, eine Handhabungsvorrichtung mit Hubschlauch dahingehend weiterzubilden, dass diese sicher automatisiert betreibbar ist.

Diese Aufgabe wird durch eine Handhabungsvorrichtung mit den Merkmalen des Anspruchs 1 gelöst.

Die Handhabungsvorrichtung ist zum Handhaben von Gegenständen ausgebildet, insbesondere zum Ansaugen, Anheben, Verlagern, Absenken und/oder Absetzen von Gegenständen. Die Handhabungsvorrichtung umfasst einen Roboter mit einem Roboterarm. Insbesondere kann der Roboterarm mehrere gelenkig miteinander verbundene und/oder translatorisch zueinander stellbare Glieder umfassen, die dann den Roboterarm bilden. Dann kann die Handhabungsvorrichtung zudem mehrere Antriebseinrichtungen zum Bewegen der gelenkig miteinander verbundenen Glieder oder der translatorisch zueinander stellbaren Glieder des Roboterarms gegeneinander aufweisen. Beispielsweise ist es denkbar, dass die Handhabungsvorrichtung als Wand- oder Säulenschwenkkrananordnung mit, vorzugsweise in einer horizontalen Ebene, schwenkbaren Kranarmen ausgebildet ist, welche die Glieder des Roboters bilden.

Die Handhabungsvorrichtung umfasst außerdem eine Greifereinrichtung zum Greifen eines Gegenstands. Insbesondere kann es sich bei der Greifereinrichtung um eine Sauggreifereinrichtung handeln, an welche ein Sauggreifer anschließbar ist oder die einen Sauggreifer bildet oder umfasst, an welchem der zu handhabende Gegenstand auch ansaugbar ist.

Die Handhabungsvorrichtung umfasst außerdem einen unterdruckbeaufschlagbaren Hubschlauch als translatorischen Antrieb zur Unterstützung einer vertikalen Stellbewegung entlang einer Z-Achse.

Der Hubschlauch weist insbesondere ein erstes Ende und ein zweites Ende auf. Der Hubschlauch weist an seinem ersten Ende eine erste Anbindungsschnittstelle zu einem Glied des Roboters auf. Der Hubschlauch weist an seinem zweiten Ende eine zweite Anbindungsschnittstelle zu der Greifereinrichtung auf. Beispielsweise kann die erste und/oder die zweite Anbindungsschnittstelle als Verbindungsflansch, insbesondere Roboterflansch, ausgebildet sein. Insbesondere kann die erste Anbindungsschnittstelle und/oder die zweite Anbindungsschnittstelle derart ausgebildet sein, dass der Hubschlauch und/oder die Greifereinrichtung um die Z-Achse drehbar ist.

Der Hubschlauch weist einen Schlauchinnenraum auf und ist derart ausgebildet, dass er durch Beaufschlagung des Schlauchinnenraums mit Unterdruck eine Hubwirkung auf die Greifereinrichtung entlang der Z-Achse ausübt. Insbesondere ist der Hubschlauch derart ausgebildet, dass durch Beaufschlagung des Schlauchinnenraums mit Unterdruck ein erstes Ende des Hubschlauchs und ein zweites Ende des Hubschlauchs entlang der Z-Achse aufeinander zu bewegbar sind.

Um ein automatisiertes Anheben und Absenken eines Gegenstands zu ermöglichen, umfasst die Handhabungsvorrichtung außerdem eine motorisch betriebene Vertikalhubeinrichtung, welche dazu ausgebildet ist, das zweite Ende des Hubschlauchs relativ zu dem ersten Ende des Hubschlauchs, insbesondere entlang der Z-Achse, zu verlagern, insbesondere zu positionieren. Die Vertikalhubeinrichtung ist insbesondere dazu ausgebildet, das erste Ende und das zweite Ende des Hubschlauchs entlang der Z-Achse aufeinander zu und/oder voneinander weg zu bewegen.

Bei einer solchen Handhabungsanlage kann ein Anheben oder Absenken der Greifereinrichtung durch Zusammenwirken von Vertikalhubeinrichtung und Hubschlauch erfolgen. Auf diese Weise können hohe Lasten, insbesondere bis 300 kg, insbesondere bis 150 kg, insbesondere bis 120 kg, insbesondere bis 110 kg, insbesondere bis 100 kg, präzise und automatisiert gehandhabt werden. Eine solche Vertikalhubeinrichtung ermöglicht es zudem, die an dem zweiten Ende des Hubschlauchs angeordnete Greifereinrichtung entlang der Z-achse positionsgenau zu verlagern, präziser als dies durch Längenveränderung des Hubschlauchs in Folge einer Druckveränderung in dem Schlauchinnenraum möglich ist. Hierdurch kann ein zu greifender Gegenstand gezielt angefahren und somit sicher gegriffen werden bzw. ein gehaltener Gegenstand positionsgenau wieder abgelegt werden. Außerdem kann bei einer solchen Handhabungsvorrichtung der Hubschlauch durch den Roboter insbesondere auch in einer horizontalen X-Y-Ebene automatisiert verlagert werden. Dies ermöglicht es, den Hubschlauch und somit einen an der Greifereinrichtung gehaltenen Gegenstand mit erhöhter Präzision und/oder erhöhter Geschwindigkeit zu verlagern, als dies von einer Bedienperson im manuellen, also handgeführten, Betrieb einer solchen Handhabungsvorrichtung möglich wäre.

Zur Versorgung des Hubschlauchs mit Unterdruck kann die Handhabungsvorrichtung eine unterdruckerzeugende Einrichtung oder eine Anschlussschnittstelle zu einer Unterdruckversorgung aufweisen. Zudem kann eine Robotersteuereinrichtung vorgesehen sein, insbesondere zur Ansteuerung des Roboters. Die Handhabungsvorrichtung kann wahlweise für automatischen Steuerungsablauf durch die Robotersteuereinrichtung wahlweise für die manuelle Bedienung durch eine Bedienperson ausgebildet sein, insb. hierfür manuelle Bedienelemente aufweisen.

Der Einsatz eines Hubschlauchs als unterstützender Antrieb entlang der vertikalen Z-Achse ist auch für einen kollaborierenden Betrieb der Handhabungsvorrichtung vorteilhaft. Kollaborierend bedeutet insbesondere, dass die Handhabungsvorrichtung in einem gemeinsamen oder überlappenden Arbeitsbereich einer Bedienperson betrieben wird und dass gegebenenfalls auch Interaktionen zwischen der Bedienperson und dem Roboter stattfinden oder stattfinden können. Durch die vorgeschlagene Ausgestaltung greift zwar die vertikale Z-Achse in den Aufenthaltsbereich der Bedienperson ein, jedoch ist ein Verletzungsrisiko durch den Einsatz des unterdruckbeaufschlagbaren Hubschlauchs auch bei schweren zu handhabenden Gegenständen reduziert, da es durch einen solchen Hubschlauch auch bei Störungen des Unterdruckbetriebs nicht zu einer Ablösung eines angesaugten Gegenstands und zu dessen Herabfallen führen, sondern die Greifereinrichtung sich lediglich mit gemächlicher Geschwindigkeit absenkt.

Für einen kollaborierenden Betrieb der Handhabungsvorrichtung kann es insbesondere vorteilhaft sein, wenn der Roboter als kollaborierender Roboter ausgebildet ist. Insofern ist der Roboter insbesondere derart ausgebildet, dass er in einem gemeinsamen oder überlappenden Arbeitsbereich einer Bedienperson betreibbar ist und dass gegebenenfalls auch Interaktionen zwischen der Bedienperson und dem Roboter stattfinden oder stattfinden können. Insbesondere kann der Roboter derart ausgebildet sein, dass die bewegbaren Glieder des Roboterarms vertikal oberhalb eines Aufenthaltsbereichs einer Bedienperson angeordnet sind, sodass ein kollaborierender Betrieb unter Anwesenheit einer Bedienperson stets sicher oder zumindest risikoarm ausgeführt werden kann. Es ist zudem denkbar, dass die den Roboterarm bildenden Glieder kraft und/oder drehmomentgesteuert sind, insbesondere derart, dass die Glieder bei Berührungskontakt mit einer Bedienperson nachgeben, was ein Verletzungsrisiko minimiert. Insbesondere kann die Handhabungsvorrichtung als kollaborierender Roboter ausgebildet sein.

Die Vertikalhubeinrichtung kann insbesondere derart ausgebildet und angeordnet sein, dass sie sich zumindest abschnittsweise zwischen dem ersten Ende und dem zweiten Ende des Hubschlauchs erstreckt. Hierdurch wird ein besonders kompakter Aufbau erzielt, was für einen Kollaborationsbetrieb von Vorteil ist. Insbesondere wird ein Arbeitsbereich nur in dem Bereich weiter eingeschränkt, der ohnehin durch den Hubschlauch belegt ist. Besonders vorteilhaft kann es sein, wenn sich die Vertikalhubeinrichtung innerhalb des Schlauchinnenraums des Hubschlauchs erstreckt.

Im Rahmen einer vorteilhaften Ausgestaltung kann die Vertikalhubeinrichtung eine längenverstellbare, insbesondere teleskopierende, Linearführungseinrichtung aufweisen. Insbesondere erstreckt sich die Linearführungseinrichtung zwischen dem ersten und dem zweiten Ende des Hubschlauchs. Durch die Linearführungseinrichtung ist der Hubschlauch insbesondere biege- und verwindungssteif ausgebildet. Insbesondere ist die Linearführungseinrichtung die vertikale Z-Achse versteifend ausgebildet. Dies ist für einen automatisierten, insbesondere kollaborierenden, Betrieb der Handhabungsvorrichtung vorteilhaft, weil es so nicht zu einer schwer kontrollierbaren Schwenk- oder Pendelbewegung der Greifereinrichtung mit dem angesaugten Gegenstand kommt. Zudem ermöglicht es eine solche Ausgestaltung mit Linearführungseinrichtung Gegenstände auch dann anzuheben, wenn der Schwerpunkt der Gegenstände nicht direkt unter dem Hubschlauch liegt, was bei den bekannten Vorrichtungen ohne Linearführungseinrichtung in der Regel dazu führt, dass der Hubschlauch sich verdreht und sich der Gegenstand von der Greifereinrichtung löst. Zu diesem Zweck kann es ferner vorteilhaft sein, wenn die erste und/oder die zweite Anbindungsschnittstelle derart ausgebildet sind, dass Momente, insbesondere Drehmomente um eine zu der Z-Achse orthogonale Drehachse, aufnehmbar sind. Dann können von der Greifereinrichtung aufgenommene Momente über die zweite Anbindungsschnittstelle an die Linearführungseinrichtung und schließlich von der Linearführungseinrichtung über die erste Anbindungsschnittstelle an den Roboterarm abgegeben werden.

Die Linearführungseinrichtung kann insbesondere parallel zu einer Längserstreckung des Hubschlauchs von dem ersten Ende zu dem zweiten Ende angeordnet sein. Es ist denkbar, dass die Linearführungseinrichtung außerhalb des Hubschlauches angeordnet ist, beispielsweise parallel zu einer Außenwarnung des Hubschlauches verlaufend. Besonders vorteilhaft ist es jedoch, wenn die Linearführungseinrichtung innerhalb des Schlauchinnenraums des Hubschlauchs angeordnet ist, insbesondere zwischen dem ersten Ende und dem zweiten Ende des Hubschlauchs erstreckend. Eine solche Ausgestaltung ist besonders platzsparend und somit für einen Kollaborationsbetrieb vorteilhaft, da der Arbeitsbereich einer Bedienperson nicht zusätzlich eingeschränkt wird. Zudem sind Störkonturen durch die Linearführungseinrichtung minimiert, was ein Verletzungsrisiko reduziert.

Im Rahmen einer besonders stabilen Ausgestaltung kann die Linearführungseinrichtung ein Teleskopgestänge umfassen, welches sich zwischen dem ersten Ende und dem zweiten Ende des Hubschlauchs erstreckt. Insbesondere kann das Teleskopgestänge mit seinem ersten Ende mit der ersten Anbindungsschnittstelle des Hubschlauchs verbunden sein und mit seinem zweiten Ende mit der zweiten Anbindungsschnittstelle verbunden sein.

Insofern kann sich das Teleskopgestänge insbesondere von dem ersten Ende zu dem zweiten Ende des Hubschlauchs erstrecken. Bei einer solchen Ausgestaltung mit Teleskopgestänge ist der Hubschlauch dann besonders biege- und verwindungssteif ausgebildet. Insbesondere können von der Greifereinrichtung aufgenommene Momente über das Teleskopgestänge an den Roboterarm abgegeben werden, sodass Gegenstände auch dann angehoben werden können, wenn der Schwerpunkt der Gegenstände nicht direkt unter dem Hubschlauch liegt. Insbesondere ist das Teleskopgestänge im Schlauchinnenraum des Hubschlauchs angeordnet.

Im Rahmen einer vorteilhaften Weiterbildung kann die Linearführungseinrichtung eine motorisch betriebene, insbesondere teleskopierende, Spindel umfassen. Über die Spindel ist eine besonders präzise Positionierung des zweiten Endes des Hubschlauchs relativ zu dem ersten Ende des Hubschlauchs möglich, sodass zu greifende Gegenstände positionsgenau angefahren werden können. Zudem kann die Spindel Last aufnehmen und das Anheben eines Gegenstandes unterstützen. Insofern kann die Spindel einen unterstützenden translatorischen Antrieb entlang der Z-Achse bilden. Insbesondere ist die Spindel nicht selbsthemmend ausgebildet. Beispielsweise kann die Spindel Teil einer Scara-Kinematik des Roboters sein.

Bei einer Ausgestaltung mit Teleskopgestänge kann die Spindel insbesondere dazu ausgebildet sein, das Teleskopgestänge in seiner Länge zu verstellen. Insofern kann die Spindel insbesondere einen Linearantrieb für das Teleskopgestänge bilden. Eine besonders kompakte Anordnung kann darin bestehen, dass die Spindel in einem Innenraum des Teleskopgestänges angeordnet ist. Dann ist die Spindel auch vor äußeren Einflüssen geschützt, was eine zuverlässige Funktion der Spindel begünstigt. Eine besonders bevorzugte Ausgestaltung kann darin bestehen, dass die Linearführungseinrichtung ein Teleskopgestänge umfasst, welches im Schlauchinnenraum des Hubschlauchs angeordnet ist, und dass die Linearführungseinrichtung eine motorisch betriebene Spindel umfasst, welche einen Linearantrieb für das Teleskopgestänge bildet und in einem Innenraum des Teleskopgestänges angeordnet ist.

Für einen automatisierten Betrieb der Handhabungsvorrichtung ist vorzugsweise eine Robotersteuereinrichtung vorgesehen. Die Robotersteuereinrichtung ist insbesondere dazu ausgebildet ist, den Roboter anzusteuern. Die Robotersteuereinrichtung kann auch mit einer Antriebseinrichtung der Vertikalhubeinrichtung, insbesondere einer Antriebseinrichtung der Spindel, und/oder einer unterdruckerzeugenden Einrichtung zusammenwirken.

Wie eingangs erwähnt, kann bei der beschriebenen Handhabungsvorrichtung ein Anheben oder Absenken der Greifereinrichtung insbesondere durch Zusammenwirken von Vertikalhubeinrichtung und Beaufschlagung mit Unterdruck erfolgen. Zu diesem Zweck ist es insbesondere vorteilhaft, wenn der Unterdruck in dem Hubschlauch in Abhängigkeit eines Betriebsparameters der Vertikalhubeinrichtung steuerbar ist.

Hierzu kann die Handhabungsvorrichtung wenigstens ein Steuerorgan umfassen, welches mit dem Hubschlauch zusammenwirkt, um einen Druck in dem Schlauchinnenraum des Hubschlauches zu verändern. Das wenigstens eine Steuerorgan ist insofern insbesondere derart ausgebildet und wirkt mit dem Hubschlauch derart zusammen, dass durch Ansteuern des wenigstens einen Steuerorgans ein in dem Schlauchinnenraum des Hubschlauches vorliegender Druck, insbesondere Unterdruck, veränderbar ist.

Das wenigstens eine Steuerorgan wirkt insbesondere mit der Robotersteuereinrichtung zusammen und ist von dieser ansteuerbar. Insbesondere ist die Robotersteuereinrichtung dazu eingerichtet, um in Abhängigkeit eines Betriebsparameters der Vertikalhubeinrichtung das wenigstens eine Steuerorgan derart anzusteuern, dass ein Druck in dem Schlauchinnenraum des Hubschlauches verändert wird, insbesondere ein Unterdruck erhöht oder erniedrigt wird. Insofern kann die Robotersteuereinrichtung dazu ausgebildet sein, um als Eingangsgröße einen Betriebsparameter der Vertikalhubeinrichtung zu erhalten und über Steuerausgänge Steuersignale an das wenigstens eine Steuerorgan zu geben. Insbesondere kann die Robotersteuereinrichtung derart ausgebildet sein, dass dann, wenn der Betriebsparameter der Vertikalhubeinrichtung einen vorgegebenen, insbesondere in der Robotersteuereinrichtung hinterlegten, ersten Schwellwert überschreitet, das wenigstens eine Steuerorgan derart angesteuert wird, dass ein Unterdruck in dem Hubschlauch erhöht oder erniedrigt wird, insbesondere bis der Betriebsparameter der Vertikalhubeinrichtung den ersten Schwellwert wieder unterschreitet oder einen zweiten Schwellwert unter- oder überschreitet.

Bei dem Betriebsparameter der Vertikalhubeinrichtung kann es sich insbesondere um eine an der Spindel anliegende Last, weiter insbesondere um ein an der Spindel anliegendes Drehmoment oder eine an der Spindel anliegende Kraft handeln. Dann kann die Handhabungsvorrichtung eine mit der Robotersteuereinrichtung zusammenwirkende Drehmoment- und/oder Kraft-Messeinrichtung zur Ermittlung eines an der Spindel anliegenden Drehmoments bzw. einer an der Spindel anliegenden Kraft umfassen. Im Rahmen einer vorteilhaften Ausgestaltung kann die Robotersteuereinrichtung dann derart ausgebildet sein, dass dann, wenn ein an der Spindel anliegendes Drehmoment einen vorgegebenen, insbesondere in der Robotersteuereinrichtung hinterlegten, ersten Schwellwert überschreitet, das wenigstens eine Steuerorgan derart angesteuert wird, dass ein Unterdruck in dem Hubschlauch derart erhöht oder erniedrigt wird, dass das an der Spindel anliegende Drehmoment reduziert wird, insbesondere bis der erste oder ein zweiter Schwellwert unterschritten ist, weiter insbesondere null ist.

Zusätzlich kann die Robotersteuereinrichtung als Eingangsgröße einen in dem Schlauchinnenraum vorliegenden Druck, insbesondere Unterdruck, erhalten. Zu diesem Zweck kann eine Unterdruckmesseinrichtung zur Ermittlung eines Unterdrucks innerhalb des Hubschlauchs vorgesehen sein. Hierfür kann zweckmäßigerweise ein Unterdrucksensor in einem unterdruckführenden Bereich des Hubschlauchs, insbesondere nahe bei der Greifereinrichtung, angeordnet sein.

Bei dem wenigstens einen Steuerorgan kann es sich beispielsweise um ein Belüftungsventil zum Belüften des Schlauchinnenraums des Hubschlauchs handeln. Insofern kann die Handhabungsvorrichtung ein Belüftungsventil umfassen. Beispielsweise kann ein Proportionalventil bei dem Hubschlauch vorgesehen sein, zur Steuerung eines Anhebens, Absenkens oder Haltens des Hubschlauchs und der Greifereinrichtung. Durch Ansteuerung des Proportionalventils kann mehr oder weniger Leckageluft in den Hubschlauch eingeleitet werden.

Alternativ oder ergänzend kann es sich bei dem wenigstens einen Steuerorgan auch um die unterdruckerzeugende Einrichtung zur Versorgung des Hubschlauchs mit Unterdruck handeln. Dann kann die Robotersteuereinrichtung insbesondere eine Drehzahlsteuereinrichtung umfassen, um die unterdruckerzeugende Einrichtung anzusteuern, insbesondere zur Vorgabe, Steuerung und/oder Regelung eines Volumenstroms oder Massenstroms, also im weitesten Sinne der Unterdruckleistung der unterdruckerzeugenden Einrichtung.

Im Rahmen einer vorteilhaften Ausgestaltung kann zur Regelung des Unterdrucks in dem Hubschlauch sowohl ein vorstehend erläutertes Belüftungsventil als auch eine Drehzahlsteuereinrichtung für die unterdruckerzeugende Einrichtung vorgesehen sein. Dabei erweist es sich als vorteilhaft, wenn die Robotersteuereinrichtung derart ausgebildet ist, dass für eine grobe Regelung des Unterdrucks und somit für eine grobe Regelung einer von dem Hubschlauch ausgeübten Kraft die Drehzahl der unterdruckerzeugenden Einrichtung gesteuert wird und für eine Feinregelung oder für eine schnelle Anpassung, z.B. für das Ablegen, der Unterdruck über das Belüftungsventil gesteuert wird.

Alternativ oder ergänzend kann es sich bei dem wenigstens einen Steuerorgan auch um ein zwischen dem Hubschlauch und einer unterdruckerzeugenden Einrichtung wirkendes Steuerventil zum Steuern, insbesondere zum Absperren oder Freigeben, einer Unterdruckzufuhr in den Schlauchinnenraum des Hubschlauchs handeln.

Im Rahmen einer vorteilhaften Ausgestaltung kann es sich bei der Greifereinrichtung um eine Sauggreifereinrichtung handeln. Insbesondere kann die Sauggreifereinrichtung durch den Schlauchinnenraum hindurch mit Unterdruck versorgbar sein. Dann kann es sich als vorteilhaft erweisen, wenn eine Absperreinrichtung im Strömungsweg zwischen dem unterdruckführenden Hubschlauch und der Sauggreifereinrichtung vorgesehen ist. Hierdurch kann die Sauggreifereinrichtung bzw. eine unterdruckbeaufschlagbare Ansaugseite der Sauggreifereinrichtung von dem Unterdruck im Hubschlauch abgekoppelt werden, was das rasche Absetzen eines angesaugten Gegenstands unterstützen kann.

Es kann auch vorgesehen sein, dass bei der Sauggreifereinrichtung ein Ventil zur Unterstützung eines Ablösens angesaugter Gegenstände oder zur Verhinderung eines Anhebens des Hubschlauchs und der Sauggreifereinrichtung beim Ansaugen eines Gegenstands vorgesehen ist. Die vorerwähnte Absperreinrichtung und auch das vorerwähnte Ventil können sowohl mittels manueller Bedienelemente bei der Sauggreifereinrichtung als auch in einem automatischen Steuerungsablauf, bspw. durch die Robotersteuereinrichtung, angesteuert werden, je nachdem, ob ein manueller Betrieb durch die Bedienperson oder ein automatischer Steuerungsablauf durch die Robotersteuereinrichtung oder eine tatsächliche Mischform ausgeführt wird.

Zur Realisierung einer weiteren Achse der Handhabungseinrichtung bzw. des Roboters kann es sich als vorteilhaft erweisen, wenn die Greifereinrichtung um die Z-Achse drehbar bezüglich eines nächstliegenden Glieds des Roboterarms angeordnet ist. Eine hierfür erforderliche Lagereinrichtung und Antriebseinrichtung kann entweder im Bereich der Greifereinrichtung oder im Bereich des angrenzenden Glieds des Roboterarms vorgesehen sein. Insbesondere kann der Hubschlauch selbst über die erste oder zweite Anbindungsschnittstelle drehbar sein.

Die Erfindung wird im Folgenden anhand der Figuren näher erläutert.

Es zeigen:
- Figur 1: eine schematische Seitenansicht einer Ausgestaltung einer Handhabungsvorrichtung; und
- Figur 2: eine vergrößerte schematische Ansicht einer Baugruppe der Handhabungsvorrichtung.

In der nachfolgenden Beschreibung sowie in den Figuren sind für identische oder einander entsprechende Merkmale jeweils dieselben Bezugszeichen verwendet.

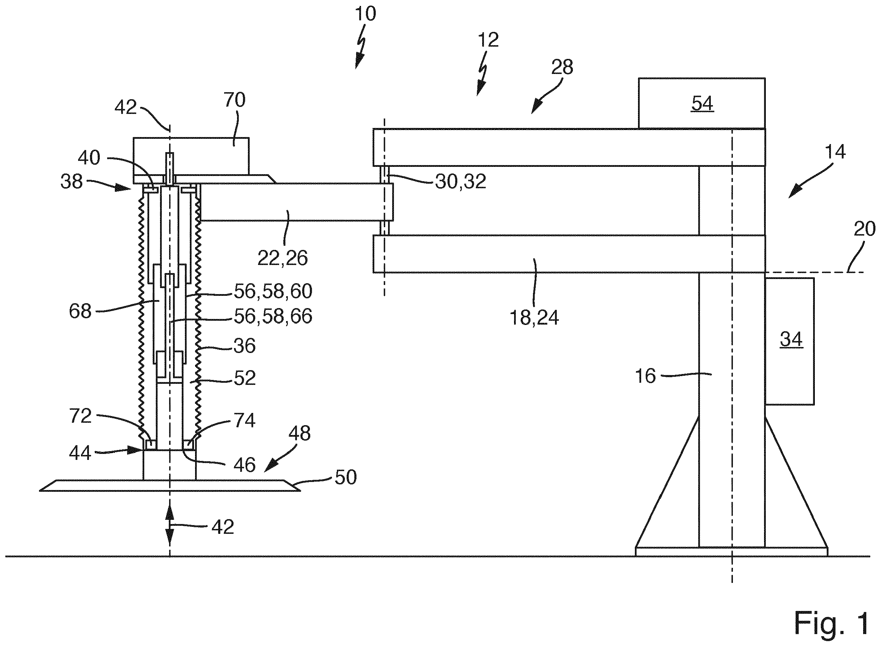

Figur 1 zeigt eine Handhabungsvorrichtung 10 zum Ansaugen, Anheben, Verlagern, Absenken und Absetzen von Gegenständen. Die Handhabungsvorrichtung 10 umfasst einen Roboter 12, der beispielhaft als kollaborierender Roboter ausgebildet ist.

Im dargestellten Beispiel ist die Handhabungsvorrichtung 10 als Säulenschwenkkrananordnung 14 ausgebildet. Sie umfasst eine feststehende in vertikaler Richtung erstreckte Standsäule 16, an der oben ein erster horizontaler Kranarm 18 in einer horizontalen Ebene 20 schwenkbar angelenkt ist. Am Ende des ersten horizontalen Kranarms 10 ist ein zweiter horizontaler Kranarm 22 ebenfalls in der horizontalen Ebene 20 oder parallel hierzu schwenkbar angelenkt. Der erste und der zweite Kranarm 10, 22 bilden zueinander schwenkbare Glieder 24, 26, die einen Roboterarm 28 des kollaborierenden Roboters 12 bilden. Zur gelenkigen Schwenkverbindung der Kranarme 10, 22 bzw. der Glieder 24, 26 des Roboterarms 28 sind Schwenklageranordnungen 30 und deren Schwenkantriebseinrichtungen 32 lediglich schematisch angedeutet. Sie sind durch eine nur angedeutete Robotersteuereinrichtung 34 ansteuerbar.

Die Handhabungsvorrichtung 10 umfasst außerdem einen unterdruckbeaufschlagbaren Hubschlauch 36, welcher an seinem ersten Ende 38 über eine erste Anbindungsschnittstelle 40 mit dem freien Ende des endständigen Gliedes 22 des Roboterarms 28 verbunden ist. Der Hubschlauch 36 erstreckt sich entlang einer vertikalen Z-Achse 42 nach unten bis zu einem zweiten Ende 44, an welchem der Hubschlauch 36 über eine zweite Anbindungsschnittstelle 46 mit einer Greifereinrichtung 48 verbunden ist. Vorzugsweise sind die erste und/oder die zweite Anbindungsschnittstelle 40, 46 derart ausgebildet sind, dass Momente um eine orthogonal zu der Zeitachse ausgerichtete Drehachse aufnehmbar sind.

Die Greifereinrichtung 48 ist in dem dargestellten Beispiel als Sauggreifereinrichtung ausgebildet, an welcher ein Sauggreifer 50 angeschlossen ist, welcher entsprechend den in der anstehenden Arbeitsaufgabe zu handhabenden Gegenständen ausgebildet bzw. ausgewählt sein kann. Bei nicht dargestellten Ausgestaltungen kann die Greifereinrichtung 48 aber auch andere Greifer-Typen umfassen.

Der Hubschlauch 36 weist einen Schlauchinnenraum 52 auf und ist derart ausgebildet, dass er durch Beaufschlagung des Schlauchinnenraums 52 mit Unterdruck eine Hubwirkung entlang der Z-Achse bereitstellt. Der Hubschlauch 36 bildet insofern einen translatorischen Antrieb zur Unterstützung einer Hebebewegung entlang der Z-Achse 42. Für die Unterdruckbeaufschlagung ist eine unterdruckerzeugende Einrichtung 54, bspw. in Form eines Gebläses, vorgesehen, die mit dem Schlauchinnenraum 52 des Hubschlauchs 36 kommuniziert, bspw. über eine unterdruckbeaufschlagbare und unterdruckführende Leitung (nicht dargestellt).

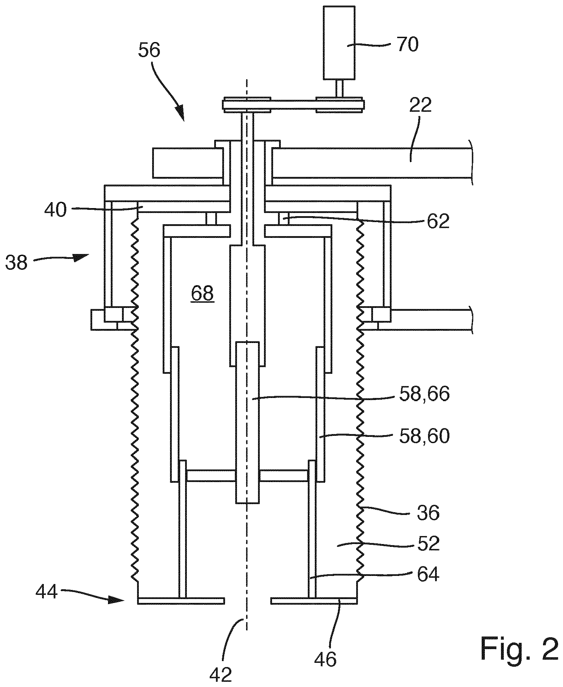

Die Handhabungsvorrichtung 10 umfasst außerdem eine motorisch betriebene Vertikalhubeinrichtung 56, welche dazu ausgebildet ist, das zweite Ende 44 des Hubschlauchs 36 relativ zu dem ersten Ende 38 des Hubschlauchs 36 entlang der Z-Achse 42 zu verlagern. In dem dargestellten Beispiel umfasst die Vertikalhubeinrichtung 56 eine Linearführungseinrichtung 58. Die Linearführungseinrichtung 58 umfasst ein Teleskopgestänge 60, welches in dem Schlauchinnenraum 52 des Hubschlauchs 36 angeordnet ist und sich zwischen dem ersten Ende 38 und dem zweiten Ende 44 des Hubschlauchs 36 erstreckt. Beispielhaft ist das Teleskopgestänge 60 mit seinem ersten Ende 62 mit der ersten Anbindungsschnittstelle 40 verbunden und mit seinem zweiten Ende 64 mit der zweiten Anbindungsschnittstelle 46 des Hubschlauchs 36 verbunden (vgl. Fig. 2).

Die Linearführungseinrichtung 58 umfasst ferner eine Spindel 66, welche in einem Innenraum 68 des Teleskopgestänges 60 angeordnet ist und ebenfalls teleskopierend ausgebildet ist. Die Spindel 66 ist über eine Antriebseinrichtung 70 motorisch antreibbar (vgl. Fig. 2). Die Spindel 66 wirkt mit dem Teleskopgestänge 60 zusammen und bildet einen Linearantrieb für das Teleskopgestänge 60. Mit anderen Worten ist das Teleskopgestänge 60 über die Spindel 66 ein- bzw. ausfahrbar und somit die Greifereinrichtung 48 entlang der Z-Achse 42 heb- oder absenkbar.

Bei nicht dargestellten Ausgestaltungen kann die Linearführungseinrichtung 58 auch außerhalb des Schlauchinnenraums 52 des Hubschlauchs 36 angeordnet sein, bspw. parallel zu einer Außenwandung des Hubschlauchs 36 verlaufend ausgebildet sein.

Das Anheben bzw. Absenken der Greifereinrichtung 48 erfolgt bei der Handhabungsvorrichtung 10 durch Zusammenwirken von Längenveränderung der Spindel 66 und Längenveränderung des Hubschlauchs 36 durch Beaufschlagung mit Unterdruck. Beispielhaft ist die Handhabungsvorrichtung 10 derart ausgebildet, dass in Abhängigkeit eines an der Spindel 66 anliegenden Drehmoments ein Unterdruck in dem Hubschlauch 36 verändert und somit der Hubschlauch entsprechend einer Spindelbewegung verkürzt oder verlängert wird.

Zu diesem Zweck umfasst die Handhabungsvorrichtung 10 ein oder mehrere Steuerorgane, welche mit dem Hubschlauch 36 zusammenwirken, um einen Druck in dem Schlauchinnenraum 52 des Hubschlauchs 36 zu verändern. Die Steuerorgane sind vorzugsweise über die Robotersteuereinrichtung 34 ansteuerbar. In dem dargestellten Beispiel bildet die unterdruckerzeugende Einrichtung 54 ein erstes Steuerorgan zur Versorgung des Hubschlauchs 36 mit Unterdruck. Insofern kann die Robotersteuereinrichtung 34 eine Drehzahlsteuereinrichtung umfassen, um die unterdruckerzeugende Einrichtung anzusteuern. Zusätzlich ist in dem dargestellten Beispiel ein schematisch angedeutetes Belüftungsventil 72 vorgesehen, welches dazu ausgebildet ist, den Schlauchinnenraum 52 des Hubschlauchs 36 bei Bedarf zu belüften, und somit ebenfalls als Steuerorgan zur Einstellung eines Drucks in dem Schlauchinnenraum 52 wirkt. Bei nicht dargestellten Ausgestaltungen kann auch nur die unterdruckerzeugende Einrichtung 54 oder nur das Belüftungsventil 72 als Steuerorgan wirken.

Die Robotersteuereinrichtung 34 ist beispielhaft dazu eingerichtet, um ein an der Spindel 66 anliegendes Drehmoment und ein in dem Schlauchinnenraum 52 vorliegenden Druck als Eingangsgrößen zu erhalten und hieraus Steuersignale an die Steuerorgane 54, 72 zu geben, um einen Unterdruck in dem Schlauchinnenraum 52 des Hubschlauchs 36 zu verändern.

Zur Bereitstellung von Eingangsgrößen ist beispielhaft eine Drehmoment-Messeinrichtung (nicht dargestellt) zur Ermittlung eines an der Spindel 66 anliegenden Drehmoments vorgesehen. Weiter ist eine schematisch angedeutete Unterdruckmesseinrichtung 74 zur Ermittlung des Unterdrucks innerhalb des Schlauchinnenraums 52 vorgesehen (vgl. Fig. 1). Ein jeweiliger Messausgang der Drehmoment-Messeinrichtung und der Unterdruckmesseinrichtung 74 sind mit einem Eingang der Robotersteuereinrichtung 34 verbunden. Hierfür kann eine an sich beliebige Daten- und Signalkommunikation verwendet werden (nicht dargestellt).

Insbesondere ist die Robotersteuereinrichtung 34 derart ausgebildet, dass dann, wenn das an der Spindel 66 anliegende Drehmoment einen vorgegebenen, insbesondere in der Robotersteuereinrichtung 34 hinterlegten, ersten Schwellwert überschreitet, wenigstens ein Steuerorgan 54, 72 derart angesteuert wird, dass ein Unterdruck in dem Hubschlauch 36 erhöht oder erniedrigt wird, sodass das Drehmoment reduziert wird, insbesondere das Drehmoment einen zweiten Schwellwert unterschreitet, weiter insbesondere null ist. Der Hubschlauch 36 wirkt insofern als unterstützender translatorischer Antrieb entlang der Z-Achse.

Wenn beispielsweise ein Gegenstand angehoben werden soll, wird die Spindel 66 zunächst derart angesteuert, dass sie das Teleskopgestänge 60 und somit die Greifereinrichtung 48 mit einem gehaltenen Gegenstand entlang der Z-Achse 42 nach oben zieht. Hierdurch steigt das an der Spindel 66 anliegende Drehmoment. Sobald das Drehmoment einen vorgegebenen ersten Schwellwert überschreitet wird über die Robotersteuereinrichtung 34 das wenigstens eine Steuerorgan 54, 72 derart angesteuert, dass ein Unterdruck in dem Schlauchinnenraum 52 des Hubschlauchs 52 erhöht wird und somit der Hubschlauch 36 verkürzt wird. Der Hubschlauch 36 nimmt in Folge dessen ebenfalls Last auf, sodass die an der Spindel 66 anliegende Last, bzw. das an der Spindel 66 anliegende Drehmoment, wieder reduziert wird. Beispielhaft und bevorzugt wird ein Unterdruck in dem Hubschlauch 36 soweit erhöht, bis das an der Spindel 66 anliegende Drehmoment einen vorgegebenen zweiten Schwellwert wieder unterschreitet, insbesondere null ist.

## Patentansprüche

1. Handhabungsvorrichtung (10) zum Handhaben von Gegenständen, umfassend:
- einen, insbesondere kollaborierenden, Roboter (12) mit einem Roboterarm (28);
- eine Greifereinrichtung (48) zum Greifen eines Gegenstands;
- einen unterdruckbeaufschlagbaren Hubschlauch (36) als translatorischen Antrieb zur Unterstützung einer vertikalen Stellbewegung entlang einer Z-Achse (42), wobei der Hubschlauch (36) an seinem ersten Ende (38) eine erste Anbindungsschnittstelle (40) zu dem Roboterarm (28) des Roboters (12) und an seinem zweiten Ende (44) eine zweite Anbindungsschnittstelle (46) zu der Greifereinrichtung (48) aufweist, wobei der Hubschlauch (36) einen Schlauchinnenraum (52) derart aufweist, dass durch Beaufschlagung des Schlauchinnenraums (52) eine Hubwirkung auf die Greifereinrichtung entlang der Z-Achse ausgeübt werden kann;
- eine motorisch betriebene Vertikalhubeinrichtung (56), welche dazu ausgebildet ist, das zweite Ende (44) des Hubschlauchs (36) relativ zu dem ersten Ende (38) des Hubschlauchs (36) zu verlagern.

2. Handhabungsvorrichtung (10) nach Anspruch 1, wobei sich die Vertikalhubeinrichtung (56) zwischen dem ersten Ende (38) und dem zweiten Ende (44) des Hubschlauchs (36) erstreckt, insbesondere innerhalb des Schlauchinnenraums (52) .

3. Handhabungsvorrichtung (10) nach einem der Ansprüche 1 oder 2, wobei die Vertikalhubeinrichtung (56) eine längenverstellbare, insbesondere teleskopierende, insbesondere die vertikale Z-Achse versteifende, Linearführungseinrichtung (58) aufweist.

4. Handhabungsvorrichtung (10) nach Anspruch 3, wobei die Linearführungseinrichtung (58) parallel zu einer Längserstreckung des Hubschlauchs (36) angeordnet ist.

5. Handhabungsvorrichtung (10) nach einem der Ansprüche 3 oder 4, wobei die Linearführungseinrichtung (58) innerhalb des Schlauchinnenraums (52) des Hubschlauchs (36) angeordnet ist.

6. Handhabungsvorrichtung (10) nach einem der Ansprüche 3 bis 5, wobei die Linearführungseinrichtung (58) ein Teleskopgestänge (60) umfasst, welches sich zwischen dem ersten Ende (38) und dem zweiten Ende (44) des Hubschlauchs (36) erstreckt, insbesondere wobei das Teleskopgestänge (60) mit seinem ersten Ende (62) mit der ersten Anbindungsschnittstelle (40) des Hubschlauchs (36) verbunden ist und mit seinem zweiten Ende (64) mit der zweiten Anbindungsschnittstelle (46) des Hubschlauchs (36) verbunden ist.

7. Handhabungsvorrichtung (10) nach einem der Ansprüche 3 bis 6, wobei die Linearführungseinrichtung (58) eine motorisch betriebene, insbesondere teleskopierende, Spindel (66) umfasst.

8. Handhabungsvorrichtung (10) nach den Ansprüchen 6 und 7, wobei die Spindel (66) einen Linearantrieb für das Teleskopgestänge (60) bildet, insbesondere wobei die Spindel (66) in einem Innenraum (68) des Teleskopgestänges (60) angeordnet ist.

9. Handhabungsvorrichtung (10) nach einem der vorherigen Ansprüche, außerdem umfassend
- wenigstens ein Steuerorgan (54, 72), welches mit dem Hubschlauch (36) zusammenwirkt, um einen Druck in dem Schlauchinnenraum (52) des Hubschlauches (36) zu verändern;
- eine Robotersteuereinrichtung (34), welche dazu eingerichtet ist, um in Abhängigkeit eines Betriebsparameters der Vertikalhubeinrichtung (56), insbesondere einer an der Spindel (66) anliegenden Last, weiter insbesondere eines an der Spindel (66) anliegenden Drehmoments oder einer Kraft, das wenigstens eine Steuerorgan (54, 72) derart anzusteuern, dass ein Druck in dem Schlauchinnenraum (52) des Hubschlauches (36) verändert wird.

10. Handhabungsvorrichtung (10) nach Anspruch 9, wobei es sich bei dem wenigstens einen Steuerorgan um ein Belüftungsventil (72) zum Belüften des Schlauchinnenraums (52) des Hubschlauchs (36) und/oder um eine unterdruckerzeugende Einrichtung (54) zur Versorgung des Hubschlauchs (36) mit Unterdruck und/oder um ein Steuerventil zum Steuern einer Unterdruckzufuhr in den Schlauchinnenraum (52) des Hubschlauchs (36) handelt.

## Claims

1. Handling apparatus (10) for handling objects, comprising:
- a robot (12), in particular a collaborating robot, having a robot arm (28);
- a gripper device (48) for gripping an object;
- a lifting tube (36), which can be subjected to negative pressure, as a translational drive for assisting a vertical adjustment movement along a Z axis (42), wherein the lifting tube (36) has, at its first end (38), a first connection interface (40) to the robot arm (28) of the robot (12) and, at its second end (44), a second connection interface (46) to the gripper device (48), wherein the lifting tube (36) has a tube interior (52), such that a lifting effect on the gripper device can be exerted along the Z axis by acting on the tube interior (52);
- a motor-driven vertical lifting device (56), which is designed to displace the second end (44) of the lifting tube (36) relative to the first end (38) of the lifting tube (36).

2. Handling apparatus (10) according to claim 1, wherein the vertical lifting device (56) extends between the first end (38) and the second end (44) of the lifting tube (36), in particular within the tube interior (52).

3. Handling apparatus (10) according to claim 1 or claim 2, wherein the vertical lifting device (56) has a length-adjustable, in particular telescopic, linear guide device (58) which in particular reinforces the vertical Z axis.

4. Handling apparatus (10) according to claim 3, wherein the linear guide device (58) is arranged in parallel with a longitudinal extension of the lifting tube (36).

5. Handling apparatus (10) according to claim 3 or claim 4, wherein the linear guide device (58) is arranged within the tube interior (52) of the lifting tube (36).

6. Handling apparatus (10) according to any of claims 3 to 5, wherein the linear guide device (58) comprises a telescopic linkage (60) which extends between the first end (38) and the second end (44) of the lifting tube (36), in particular wherein the telescopic linkage (60) is connected at its first end (62) to the first connection interface (40) of the lifting tube (36) and is connected at its second end (64) to the second connection interface (46) of the lifting tube (36).

7. Handling apparatus (10) according to any of claims 3 to 6, wherein the linear guide device (58) comprises a motor-driven, in particular telescopic, spindle (66).

8. Handling apparatus (10) according to claims 6 and 7, wherein the spindle (66) forms a linear drive for the telescopic linkage (60), in particular wherein the spindle (66) is arranged in an interior (68) of the telescopic linkage (60).

9. Handling apparatus (10) according to any of the preceding claims, further comprising
- at least one control member (54, 72), which interacts with the lifting tube (36) in order to change a pressure in the tube interior (52) of the lifting tube (36);
- a robot control device (34), which is designed to control the at least one control member (54, 72) depending on an operating parameter of the vertical lifting device (56), in particular a load applied to the spindle (66), more particularly a torque or a force applied to the spindle (66), in such a way that a pressure in the tube interior (52) of the lifting tube (36) is changed.

10. Handling apparatus (10) according to claim 9, wherein the at least one control member is a ventilation valve (72) for ventilating the tube interior (52) of the lifting tube (36) and/or an negative-pressure-generating device (54) for supplying the lifting tube (36) with negative pressure and/or a control valve for controlling a negative pressure supply into the tube interior (52) of the lifting tube (36).

## Revendications

1. Dispositif de manipulation (10) destiné à manipuler des objets, comprenant:
- un robot (12), en particulier collaborant, comprenant un bras de robot (28);
- un dispositif de préhension (48) destiné à saisir un objet;
- un tuyau flexible de levage (30) apte à être alimenté en dépression, en tant qu'entraînement en translation pour supporter un mouvement de réglage vertical le long d'un axe Z (42), dans lequel le tuyau flexible de levage (36) présente une première interface de connexion (40) au bras de robot (28) du robot (12) au niveau de sa première extrémité (38) et une deuxième interface de connexion (46) au dispositif de préhension (48) au niveau de sa deuxième extrémité (44), dans lequel le tuyau flexible de levage (36) comprend un volume intérieur de tuyau flexible (52) de telle sorte qu'un effet de levage puisse être exercé sur le dispositif de préhension le long de l'axe Z en agissant sur le volume intérieur de tuyau flexible (52);
- un dispositif de levage vertical (56) actionné par moteur qui est conçu pour déplacer la deuxième extrémité (44) du tuyau flexible de levage (36) par rapport à la première extrémité (38) du tuyau flexible de levage (36).

2. Dispositif de manipulation (10) selon la revendication 1, dans lequel le dispositif de levage vertical (56) s'étend entre la première extrémité (38) et la deuxième extrémité (44) du tuyau flexible de levage (36), en particulier à l'intérieur du volume intérieur de tuyau flexible (52).

3. Dispositif de manipulation (10) selon l'une quelconque des revendications 1 ou 2, dans lequel le dispositif de levage vertical (56) présente un dispositif de guidage linéaire (58) réglable en longueur, en particulier télescopant, en particulier rigidifiant l'axe Z vertical.

4. Dispositif de manipulation (10) selon la revendication 3, dans lequel le dispositif de guidage linéaire (58) est disposé parallèlement à une extension longitudinale du tuyau flexible de levage (36).

5. Dispositif de manipulation (10) selon l'une quelconque des revendications 3 ou 4, dans lequel le dispositif de guidage linéaire (58) est disposé à l'intérieur du volume intérieur de tuyau flexible (52) du tuyau flexible de levage (36).

6. Dispositif de manipulation (10) selon l'une quelconque des revendications 3 à 5, dans lequel le dispositif de guidage linéaire (58) comprend une tringlerie télescopique (60) qui s'étend entre la première extrémité (38) et la deuxième extrémité (44) du tuyau flexible de levage (36), en particulier dans lequel la tringlerie télescopique (60) est reliée par sa première extrémité (62) à la première interface de connexion (40) du tuyau flexible de levage (36) et par sa deuxième extrémité (64) à la deuxième interface de connexion (46) du tuyau flexible de levage (36).

7. Dispositif de manipulation (10) selon l'une quelconque des revendications 3 à 6, dans lequel le dispositif de guidage linéaire (58) comprend une broche (66) actionnée par moteur, en particulier télescopante.

8. Dispositif de manipulation (10) selon les revendications 6 et 7, dans lequel ladite broche (66) forme un entraînement linéaire pour la tringlerie télescopique (60), en particulier dans lequel la broche (66) est disposée dans un volume intérieur (68) de la tringlerie télescopique (60).

9. Dispositif de manipulation (10) selon l'une quelconque des revendications précédentes, comprenant en outre
- au moins un organe de commande (54, 72) qui agit de concert avec le tuyau flexible de levage (36) afin de modifier une pression dans le volume intérieur de tuyau flexible (52) du tuyau flexible de levage (36) ;
- un dispositif de commande de robot (34) qui est configuré pour commander ledit au moins un organe de commande (54, 72) en fonction d'un paramètre de fonctionnement du dispositif de levage vertical (56), en particulier d'une charge appliquée à la broche (66), de plus en particulier d'un couple appliqué à la broche (66) ou d'une force de telle sorte qu'une pression dans le volume intérieur de tuyau flexible (52) du tuyau flexible de levage (36) soit modifiée.

10. Dispositif de manipulation (10) selon la revendication 9, dans lequel ledit au moins un organe de commande est une vanne d'aération (72) pour aérer le volume intérieur de tuyau flexible (52) du tuyau flexible de levage (36) et/ou un dispositif (54) générant de la dépression pour alimenter en dépression le tuyau flexible de levage (36) et/ou une soupape de commande pour commander une alimentation en dépression dans le volume intérieur de tuyau flexible (52) du tuyau flexible de levage (36).
